Europäisches Patentamt

(19) European Patent Office                    (11) Publication number:    **0 013 171**
Office européen des brevets                                          **B1**

(12)                  **EUROPEAN PATENT SPECIFICATION**

(45) Date of publication of patent specification: **23.05.84**    (51) Int. Cl.³: **H 02 P 5/40**

(21) Application number: **79303030.5**

(22) Date of filing: **21.12.79**

(54) Induction motor drive apparatus.

(30) Priority: **30.12.78 JP 164135/78**

(43) Date of publication of application:
**09.07.80 Bulletin 80/14**

(45) Publication of the grant of the patent:
**23.05.84 Bulletin 84/21**

(84) Designated Contracting States:
**DE FR GB**

(56) References cited:
**EP-A-0 010 981**
**DE-A-2 521 860**
**US-A-3 700 986**
**US-A-3 899 725**
**US-A-3 962 614**
**US-A-4 001 660**

(73) Proprietor: **FANUC LTD**
**5-1, Asahigaoka 3-chome Hino-shi**
**Tokyo 191 (JP)**

(72) Inventor: **Kawada, Shigeki**
**346-15, Oaza-Shimoda Hino-shi**
**Tokyo (JP)**
Inventor: **Ishida, Hiroshi**
**2-73, Matsubara-cho, 2-chome Hamura-machi**
**Nishitama-gun Tokyo (JP)**
Inventor: **Koiwai, Yutaka**
**12-27, Kita-shinjuku, 3-chome Shinjuku-ku**
**Toyko (JP)**

(74) Representative: **Overbury, Richard Douglas et al**
**HASELTINE LAKE & CO Hazlitt House 28**
**Southampton Buildings Chancery Lane**
**London WC2A 1AT (GB)**

## Description

The present invention relates to induction motor drive apparatus.

An operating mode referred to as an orientation mode is adopted when a tool is to be mounted on the spindle of a machine tool. In this orientation mode, the mounting of the tool on the spindle is performed as follows. Firstly, the spindle is rotated slowly until cutting portions formed respectively on the tool and a hand portion of the spindle are face to face. When one cutting portion faces another, the rotation of the spidnle is stopped. After this operation, the tool is fixedly mounted on the spindle. Herein, it is taken that one cutting portion faces another when a pin projected from the spindle in the orientation mode strikes a stop portion.

In the orientation mode, a motor driving the spindle has to rotate smoothly with a suitable driving torque—the spindle and other equipment can be damaged if the driving torque is too large, whereas secure mounting of the tool on the spindle is not assured, and efficiency of machining can be reduced, if the driving torque is too small.

In the orientation mode it is therefore necessary to generate a driving torque whose magnitude is in the range from one third to one half the driving torque generated in a cutting mode.

For driving the spindle of a machine tool, it may be possible to use a D.C. motor or an A.C. induction motor. From the standpoint of ease of control, a D.C. motor is efficient because a low speed and low torque control technique is available for such a motor. On the other hand, despite this merit, a D.C. motor can have a variety of disadvantages such as maintenance problems in relation to commutators and brushes, complexity of construction, large size and high cost.

If an induction motor could be utilized instead of a D.C. motor as a spindle motor, the disadvantages of D.C. motors could be avoided. To be satisfactory an induction motor should meet the following requirements.

(a) In an orientation mode, that is to say in a low speed and low torque region the induction motor must rotate smoothly, and

(b) The induction motor must rotate with a suitable driving torque so as not to damage the spindle etc., when the projected pin strikes the stop portion.

Attention is directed to the present applicant's European Patent Application No. 79302435.7 (publication Number 0010981.), which falls within the terms of Article 54/3) of the European Patent Convention and which discloses induction motor drive apparatus enabling an induction motor driven by the apparatus to rotate smoothly at low speed.

US—A—3 700 986 discloses induction motor drive apparattus which does not employ an inverter for converting DC voltage into three-phase AC voltage for driving the motor. Rather, direct and quadrature axis voltages are calculated on the basis of a limited slip command and the rotational rate of the motor in accordance with equations given in US—A—3 700 986. The direct and quadrature axis voltages are applied to digital resolvers which resolve those voltages into phase voltages which, after amplification are applied to the induction motor. Direct and quadrature axis currents are computed from speed and load conditions, compared with measured values (as resolved from measured stator currents) and differences amplified to generate direct and quadrature axis voltages which are then resolved as mentioned above.

The direct axis voltage is calculated as a product of a limited slip command and a sum of the limited slip command and the actual rotational speed of the motor. The quadrature axis voltage is calculated as a sum of the limited slip command and the actual speed of the motor.

DE—A1—2 521 860 discloses the pulse-width modulation of rectangular wave signals by comparing rectangular wave signals with sawtooth signals. This can be employed in control of 3-phase AC voltage for an alternating current motor.

According to the present invention there is provided induction motor drive apparatus, which includes an inverter for converting DC voltage into three-phase AC voltage, an induction motor driven by the three-phase AC voltage, command means for instructing the induction motor to rotate at a command speed,. means for detecting the actual-speed of the motor speed deviation signal generating means for generating a speed deviation signal based on the difference between command speed and actual speed of the motor, and means for controlling the effective value and the frequency of the three-phase AC driving signals applied to the induction motor on the basis of the speed deviation signal, the apparatus further including torque limit signal generating means for generating a torque limit signal, amplitude control means operable to control the amplitude of the speed deviation signal when a torque limit signal is generated, slip value signal generating means for generating a slip value signal of a constant voltage magnitude, positive or negative in dependence upon the direction of torque of the motor, addition means for adding the actual speed signal to the slip value signal to provide an addition signal, being a primary frequency command signal, and multiplying means for providing a multiplication product, being a primary voltage command signal, dependent upon the addition signal and the speed deviation signal as supplied from the amplitude control means, the control of the amplitude of the speed deviation signal by the amplitude control means being such that when the torque limit signal is generated the driving signals limit the torque of the induction motor in a low speed region to less than a preselected torque value, rectangular wave signal generating means for producing three-phase rectangular wave signals of a frequency dependent upon the addition signal, and pulse width modulating means for modulating the width of the three-phase rectangular wave signals in dependence upon the said multiplication product, the inverter being controlled in dependence upon the pulse-width modulated three-phase rectangular wave signals thereby to control the frequency and effective value of the driving signals.

An embodiment of the present invention can provide induction motor drive apparatus allowing smooth rotation of an induction motor in a low torque and low speed region.

An embodiment of the present invention can provide induction motor drive apparatus for an induction motor for a machine tool capable of providing secure mounting of a tool on a spindle of the machine in an orientation mode.

An embodiment of the present invention can provide induction motor drive apparatus for an induction motor for a machine tool that can prevent damage to a spindle etc., when a pin projecting from the spindle strikes a stop portion in the orientation mode.

An embodiment of the present invention can provide induction motor drive apparatus for an induction motor for a machine tool that can render the driving torque of the induction motor in a low speed region or in the orientation mode one third to one half of the torque in a high speed region or in a cutting mode.

Reference will now be made, by way of example, to the accompanying drawings, in which:—

Figure 1 is a graph useful in explaining the dependence of torque-speed characteristics of an induction motor upon primary frequency,

Figure 2 is a graph useful in explaining the dependence of torque-speed characteristics of an induction motor upon primary voltage;

Figure 3 is a graph useful in explaining the dependence of primary voltage-primary frequency characteristics of an induction motor upon voltage and frequency;

Figure 4 is a block circuit diagram of induction motor drive apparatus embodying the present invention;

Figure 5 is a timing chart showing signal waveforms associated with the induction motor drive apparatus of Figure 4;

Figure 6 is a table useful in explaining the operation of a ring counter for generating a three-phase rectangular wave;

Figure 7 is a block circuit diagram of one form of amplitude control circuit for use in the apparatus of Figure 4;

Figure 8 is a graph useful in explaining input-output characteristics of the amplitude control circuit of Figure 7;

Figure 9 is a block circuit diagram of another form of amplitude control circuit for use in the apparatus of Figure 4;

Figure 10 is a graph useful in explaining input-output characteristics of the amplitude control circuit of Figure 9;

Figure 11 is a graph for explaining primary voltage command signal versus speed deviation characteristics in relation to the apparatus of Figure 4; and

Figure 12 is a graph for explaining frequency command signal versus actual induction motor speed characteristics in relation to the apparatus of Figure 4.

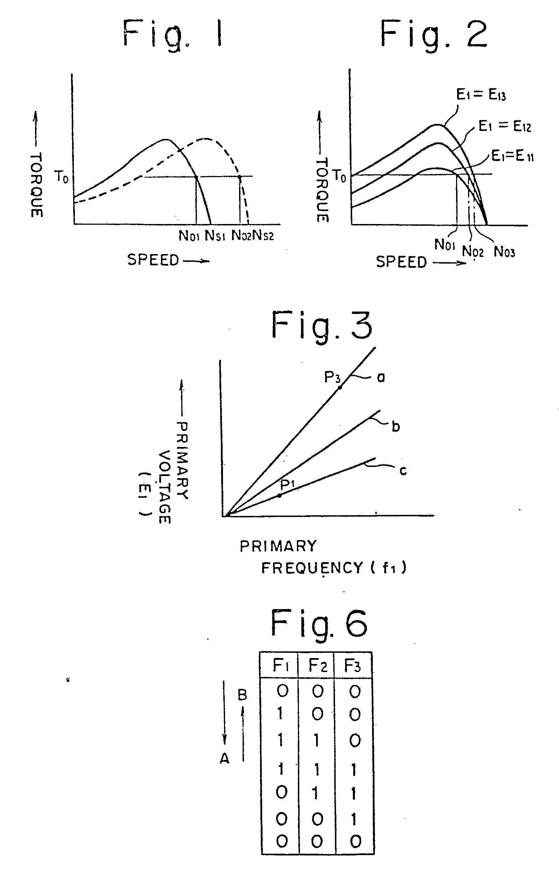

Figures 1 to 3 are graphs which are useful for explaining the theory of speed control as it relates to induction motors. Specifically, Figure 1 shows torque-speed characteristics in a case in which the primary frequency of the motor is varied, Figure 2 shows the torque-speed characteristics in a case in which the primary voltage of the motor is varied, and Figure 3 shows the primary voltage-primary frequency characteristics in a case in which the motor is subjected to variable voltage variable frequency (VVVF) control.

When an induction motor is supplied with three-phase AC voltage a revolving magnetic field is generated which drives a rotor of the motor. Under no-load conditions the induction motor will rotate at a speed $N_s$ substantially synchronous with the applied voltage but as load increases motor speed will assume a value N which is such as to produce a torque that conforms to the applied load. If $f_1$ represents the frequency of the three-phase AC voltage (the primary voltage) applied to the motor, and P the number of poles of the motor,

$$N_s = 2f_1/P \qquad (1)$$

If the synchronous speed of the induction motor is set to $N_{s1}$, the torque-speed (T-S) characteristic thereof follows the curve indicated by the solid line in Figure 1, from which it can be understood that the induction motor will rotate at a speed $N_{o1}$ if connected to a load that corresponds to a torque $T_o$. If the synchronous speed is changed to $N_{s2}$, by changing the frequency $f_1$ of the primary voltage (i.e., by changing the primary frequency $f_1$), the T-S characteristic shifts to that indicated by the broken-line curve in Figure 1, so that the induction motor will rotate at a speed $N_{o2}$. In other words, the speed of the induction motor can be controlled by controlling the primary frequency $f_1$.

On the other hand, if the synchronous speed of the motor is held constant and the effective value $E_1$ of the primary voltage $e_1$ is varied the torque-speed characteristics of the motor follow the curves illustrated in Figure 2, where $E_{11}$, $E_{12}$ and $E_{13}$ are respective different values of the primary voltage and are related by the inequality $E_{11} < E_{12} < E_{13}$. The graph of Figure 2 shows that the induction motor will rotate at a speed $N_{o1}$ if the effective value of the primary voltage is $E_{11}$ and the load corresponds to the

torque $T_o$. The speed of the motor will gradually increase to $N_{o2}$, $N_{o3}$, if the effective value of the primary voltage is changed to assume the values $E_{12}$, $E_{13}$ with the torque remaining constant at $T_o$. More specifically, for a given torque, changing the effective value $E_1$ of the primary voltage enables the speed of the induction motor to be controlled.

Variable voltage-variable frequency control may be explained as follows. The primary current $I_1$ of the induction motor and the generated torque $T$ are respectively proportional to $E_1/f_1$ and $(E_1/f_1)^2$ in a speed range wherein the primary resistance drop can be neglected. Hence, if the primary frequency $f_1$ and effective value $E_1$ of the primary voltage are varied so as to remain in the same proportion to one another, the primary current $I_1$ and the generated torque $T$ can be held constant whilst the speed of the induction motor can be controlled in a continuous manner. This control is referred to as VVVF control. The relation between primary voltage $E_1$ and primary frequency $f_1$ in the case of VVVF control is illustrated by the straight lines in Figure 3. Here the respective straight lines $a$, $b$ and $c$ represent the $E_1$-$f_1$ characteristics with the primary current $I_1$ held at respective constant values $I_{11}$, $I_{12}$ and $I_{13}$, where the inequality $I_{11}<I_{12}<I_{13}$ holds. It should be noted that the torque $T$ is proportional to the square of the primary current $I_1$, so that the straight lines $a$, $b$ and $c$ can also be considered as representing $E_1$-$f_1$ characteristics relating to respective constant torque values $T_{11}$, $T_{12}$ and $T_{13}$, where the inequality $T_{11}<T_{12}<T_{13}$ holds.

Thus, changing the primary frequency $f_1$ or the effective value of the primary voltage $e_1$ enables the speed of the induction motor to be controlled, and changing the primary frequency $f_1$ and the primary voltage $e_1$ together in such a way that they remain in the same proportion to one another, enables the speed of the induction motor to be controlled keeping the driving torque constant.

Further, high torque can be generated in a high speed region and low torque in a low speed region respectively by controlling the primary frequency and the effective value of the primary voltage so as to satisfy the following inequality.

$$E_1(H)/f_1(H) > E_1(L)/f_1(L)$$

Herein $f_1(H)$, $E_1(H)$ indicate respectively the primary frequency and the effective value of the primary voltage in the high speed region and $f_1(L)$, $E_1(L)$ the primary frequency and the effective value of the primary voltage in the low speed region. That is to say, if in the high speed region the operating point of the induction motor is located at the point $P_3$ on the straight line $a$ of Figure 3, and in the low speed region the operating point of the induction motor is located at the point $P_1$ on the straight line $c$, high torque $T_{13}$ is obtained in the high speed region and low torque $T_{11}$ ($T_{13}>T_{11}$) in the low speed region.

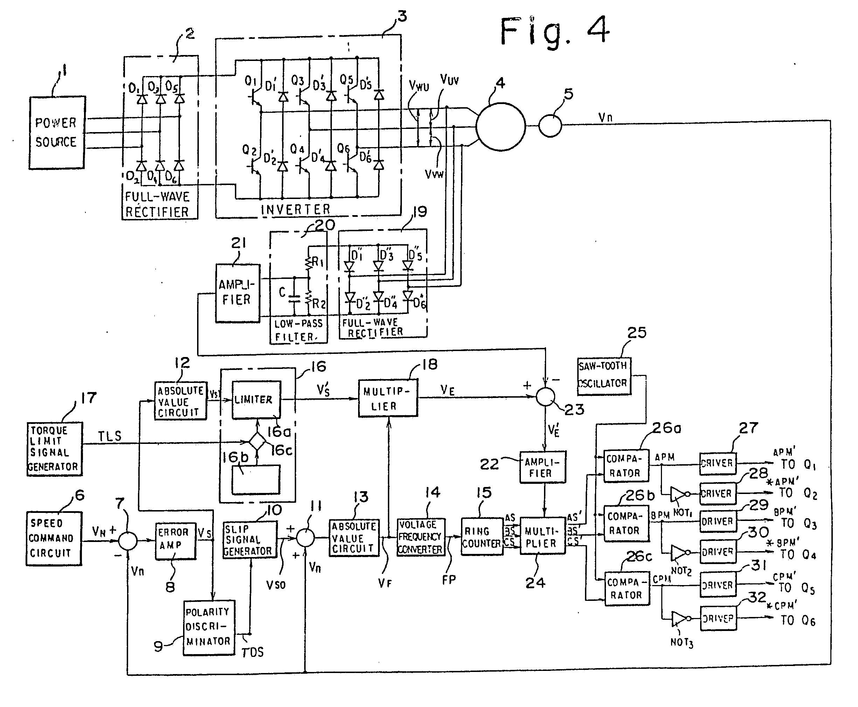

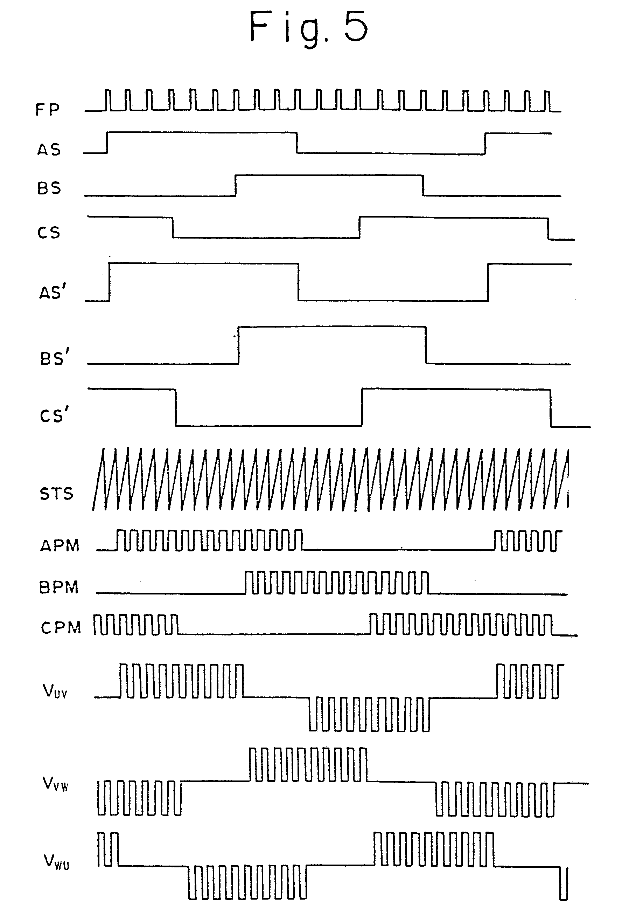

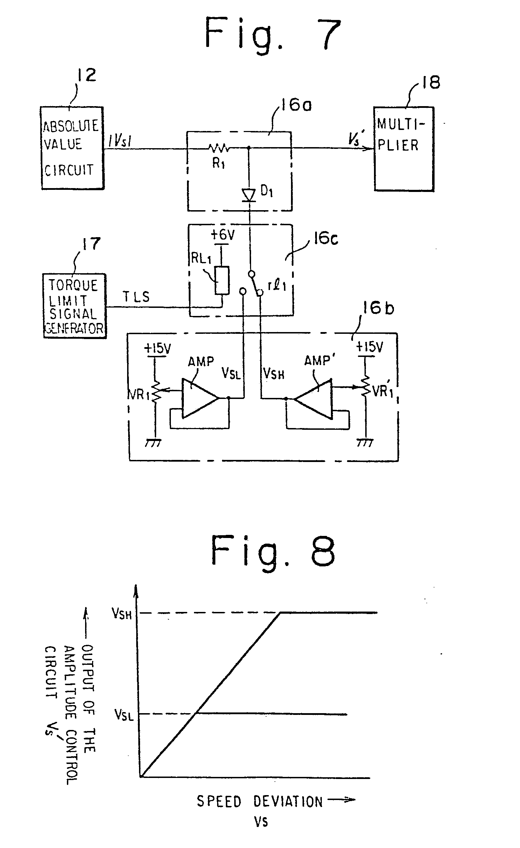

Figure 4 is a block circuit diagram of induction motor drive apparatus embodying this invention, Figure 5 is a timing chart showing associated waveforms, and Figure 6 is a table useful in explaining the operation of a ring counter.

Referring now to Figure 4, a three-phase AC power source 1 supplies sinusoidal, three-phase AC power to a full-wave rectifier circuit 2 comprising diodes $D_1$ to $D_6$ and adapted to produce a DC voltage by full-wave rectifying the three-phase AC voltage. An inverter circuit 3 comprising power transistors $Q_1$ to $Q_6$ and diodes $D'_1$ to $D'_6$ receives the full-wave rectified DC voltage from full-wave rectifier 2 and converts this voltage from full-wave rectifier 2 and converts this voltage to a three-phase AC voltage which has a stepped, nearly sinusoidal, wave-form whose frequency and effective value can be changaed by controlling the on-off timing of the power transistors $Q_1$ to $Q_6$. A three-phase induction motor generally designated 4 has a shaft which mounts a speed detector 5 such as tachometer generator, the latter being adapted to generate an analog voltage which is proportional to the rotational speed $V_n$ of the motor. A speed command circuit 6 supplies to an analog adder 7 an analog voltage which is proportional to a command speed $V_N$. The adder 7 also receives the analog voltage from speed detector 5 and produces an output voltage which is proportional to a speed deviation $V_s$ ($=V_N-V_n$) between the command speed $V_N$ and the actual speed $V_n$.

It should be noted that "slip" $s$ is defined as a variable that represents the speed deviation of the induction motor, and that it is obtained by the following

$$s=(V_{sn}-V_n)/V_{sn} \qquad (2)$$

where $V_{sn}$ is the synchronous speed of the motor and $V_n$ the actual speed thereof. Thus, if the command speed $V_N$ obtained from the speed command circuit 6 is considered to be the synchronous speed $V_{sn}$, the output voltage of the analog adder 7 can be considered as being proportional to the slip $s$.

An error amplifier 8 amplifies the speed deviation signal $V_s$, applies the amplified signal to polarity discriminator 9 which produces a torque direction signal TDS indicating the torque direction of the induction motor 4 which is applied to a slip signal generator 10 which generates a slip signal $V_{so}$ having a positive or negative constant voltage corresponding to the torque direction of the induction motor 4. An adder 11 adds together actual speed $V_n$ and slip signal $V_{so}$; ($V_n+V_{so}$).

The amplified signal from amplifier 8 is also applied to an absolute value circuit 12 which produces an output which is the absolute value of the speed deviation $V_s$ ($=V_N-V_n$).

An absolute value circuit 13 produces an output which is the absolute value of the signal $(V_n+V_{so})$ received from the analog adder 11. A voltage-frequency converter 14 produces a pulse train FP whose frequency is proportional to the output voltage $V_F$ delivered by the absolute value circuit 13. A ring counter 15, which receives the pulse train FP has three flip-flop stages which produce three-phase rectangular signals AS, BS and CS successively displaced in phase by $2\pi/3$. More specifically, if the set outputs of the respective flip-flops are designated $F_1$, $F_2$ and $F_3$ the state of the $F_1$ to $F_3$ outputs will change as shown in Figure 6 every time a signal pulse of the pulse train FP is generated by the voltage-frequency converter 14. Accordingly, if the set outputs $F_1$, $F_2$, $F_3$ of the respective flip-flops are delivered in the mentioned order, three-phase rectangular signals AS, BS and CS will be produced successively displaced in phase by $2\pi/3$. The direction in which each of the flip-flops undergoes a change in state is shown by arrow A in Figure 6 if the induction motor 4 is rotating in the forward direction, and by the arrow B if the motor is rotating in the reverse direction.

An amplitude control circuit 16 limits the amplitude of the absolute value of the speed deviation signal, supplied from absolute value circuit 12, to below a prescribed clamp voltage and includes a limiter 16a, a clamp voltage setting circuit 16b for setting the clamp voltage and a switching circuit 16c for making the function of the limiter effective in dependence upon a torque limit signal TLS generated from a torque limit signal generator 17.

Figure 7 shows in more detail one form of amplitude control circuit 16, comprising a resistor denoted by $R_1$, a diode $D_1$, a relay $RL_1$, a relay contact $rl_1$, variable resistors $VR_1$, $VR_1'$ and amplifiers AMP, AMP'. The relay $RL_1$ is driven when the torque limit signal TLS, which may be an orientation signal, is generated. In a case in which the relay $RL_1$ is not driven, the relay contact $rl_1$ assumes the state shown in Figure 7. Hence, the high clamp voltage $V_{SH}$ obtained by adjusting the variable resistor $VR_1'$ is applied to the anode of the diode $D_1$. If the speed deviation $V_S$ is smaller than the clamp voltage $V_{SH}$, the diode $D_1$ is reverse biased and in response $V_S$ is produced as an output and if $V_S$ is larger than $V_{SH}$, $V_{SH}$ is produced as an output. On the other hand, in a case in which the relay is driven by an orientation signal, the low clamp voltage $V_{SL}$ ($V_{SL}<V_{SH}$) obtained by adjusting the variable resistor $VR_1$ is applied to the anode of the diode $D_1$. Therefore, if inequality $V_S<V_{SL}$ is satisfied, $V_S$ is produced as an output but if $V_S \geqslant V_{SL}$ is satisfied, $V_{SL}$ is produced as an output. Above all, the amplitude of the speed deviation signal is limited to at most the prescribed low clamp voltage $V_{SL}$ when an orientation mode of operation is selected (when the orientation signal is "1").

Figure 8 is a graph useful in explaining input $(V_S)$—output $(V'_S)$ characteristics of the amplitude control circuit 16 of Figure 7.

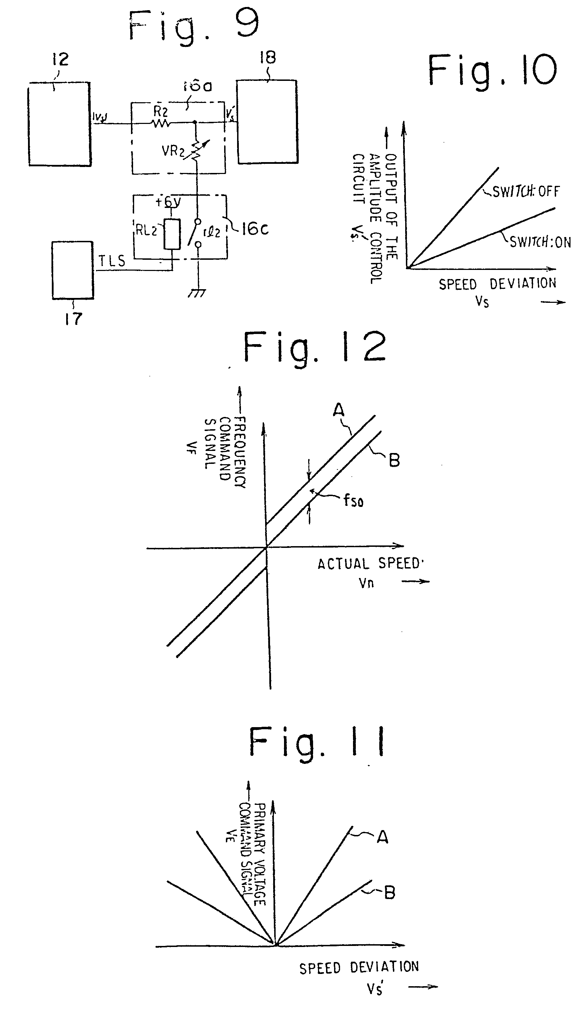

Figure 9 shows another form of amplitude control circuit 16, comprising a resistor $R_2$, a variable resistor $VR_2$, a relay $RL_2$, and a relay contact $rl_2$. The relay $RL_2$ is driven when the torque limit signal TLS or the orientation signal is logical "1". In a case in which the relay is not driven, the output $V_S$ of the absolute value circuit 12 is generated as an output and in a case in which the relay is driven, the output $V_S$ is divided by the resistor $R_2$ and the variable resistors $VR_2$ and $(V_S \cdot (VR_2/(R_2+VR_2)))$ is generated as an output.

Figure 10 is a graph useful in explaining input $(V_S)$—output $(V_S')$ characteristics of the amplitude control circuit in Figure 9.

Returning to Figure 4, an analogue multiplier 18 multiplies the speed deviation $V_S'$ from amplitude control circuit 16 by the frequency command signal $V_F$ from the absolute value circuit 13 and in response produces a primary voltage command signal $V_E$ ($=V_S' \cdot V_P$). Here, the amplitude of the primary voltage command signal $V_E$ is shown by using $V_S'$ as follows.

$$V_E = V_S' \cdot V_F = V_S' \cdot (V_{SO}+V_n)$$

$$= V_S' \cdot (V_{SO}+V_N-V_S) \simeq V_N \cdot V_S'$$

Accordingly, in the high speed region the $V_E$–$V_S'$ characteristic assumes the form of straight line $A$ in the graph of Figure 11 and in the low speed region the $V_E$–$V_S'$ characteristic assumes the form of straight line $B$ in Figure 11.

Since the effective value of the primary voltage supplied to the induction motor is determined by the primary voltage command signal $V_E$ as described hereinafter, the driving torque in the low speed region is smaller than that in the high speed region.

A full-wave rectifier 19 comprising diodes $D_1''$ to $D_6''$ full-wave rectifies the three-phase AC voltage obtained from the inverter 3. A low-pass filter 20 comprising resistors $R_1$, $R_2$ and a capacitor C is adapted to level ripple contained in the DC voltage as rectified and delivered by the full-wave rectifier 19. An adder 23 is adapted to add the output of multiplier 18 and the output from an amplifier 21 which is an amplified version of the output of low-pass filter 20. An analog multiplier 24 is adapted to multiply the rectangular wave signals AS, BS, CS by the output of an amplifier 22 (which output is an amplified version of the output of adder 23) and in response produces three-phase rectangular wave signals AS', BS', CS' whose amplitudes conform to the speed deviation $V_S'$ and the frequency command signal $V_F$.

A saw-tooth oscillator circuit 25 produces a saw-tooth signal STS having a period which is considerably shorter than that of the three-phase rectangular signals AS', BS', CS'. Comparators 26a, 26b, 26c compare the amplitude of the saw-toohh STS with those of the respective three-phase rectangular signals AS', BS', CS' and each comparator produces an output at logic "1" if the amplitude of its AS', BS' or CS' input, as the case may be, is the greater. In other words, the saw-tooth oscillator circuit 25, multiplier 24 and comparators 26a, 26b, 26c form a pulse width modulator circuit which is adapted to provide phase control signals APM, BPM, CPM which consist of the respective rectangular signals AS', BS', CS' after they have been modulated in pulse width in accordance with their amplitudes. The outputs of comparators 26a to 26c are delivered directly to respective drivers 27, 29, and 31, and are delivered via respective NOT gates $NOT_1$ to $NOT_3$ to respective drivers 28, 30 and 32. The outputs of drivers 27 to 32 are delivered to the bases of the respective power transistors $Q_1$ to $Q_6$ of the inverter circuit 3.

A description of the operation of the system shown in Figure 3 will now follow with reference being had to the timing chart of Figure 5.

(a) Speed control of the induction motor

If the induction motor 4 is rotating in the forward direction with a prescribed speed deviation, a change in load will give rise to a change in the actual speed $V_n$ of the motor, the latter conforming to the increase or decrease in the load. Let us now assume that the load increases, giving rise to a drop in the actual speed $V_n$. The actual motor speed $V_n$ is detected by the tachometer generator 5 which produces an output voltage proportional thereto. The adder 7 operates on the speed command signal $V_N$ being provided by the speed command circuit 6 and the actual motor speed $V_n$ supplied by the tachometer generator to produce an output signal representative of the difference $V_s$ (=$V_N-V_n$). This signal is supplied to the absolute value circuit 12 and the polarity discriminator circuit 9 which act upon the signal to provide an absolute value signal $V_s$ and a torque direction signal TDS. This absolute value signal $V_s$ is then applied to the amplitude control circuit 16 which controls the amplitude of the signal $V_s$ as described above in connection with the Figure 7. The torque direction signal TDS is supplied to the slip signal generator 10. The slip signal generator 10 generates a slip signal $V_{SO}$ having a positive or negative voltage corresponding to the torque direction of the induction motor, that is, logical value of the torque direction signal TDS. Herein, the amplitude of the slip signal $V_{SO}$ is adjusted to be equal to the speed deviation $V_s$ at times when the induction motor 4 rotates in a steady-state. The adder 11 adds together the slip signal $V_{SO}$ and the actual speed $V_n$ and in response produces the frequency command signal $V_F$ via the absolute value circuit 13. On the other hand the frequency command signal $V_F$ is then supplied to the voltage-frequency converter 14 which converts the signal $V_F$ into a pulse train FP whose frequency is proportional thereto. The ring counter 15 receives the pulse train FP provided by voltage-frequency converter 14, and in response thereto produces the three-phase rectangular voltage signals AS, BS, CS which, in addition to having a fixed peak value, are proportional in frequency to the frequency command signal $V_F$ and exhibit the prescribed phase rotation directions as described above. The signals AS, BS, CS are in turn delivered to multiplier 24.

Meanwhile the speed deviation $V_s'$ delivered by the amplitude control circuit 16, together with the frequency command signal $V_F$ from the absolute value circuit 13, is used to produce a primary voltage command signal $V_E$ for effecting variable voltage control. To this end, the signals $V_s'$ and $V_F$ are multiplied together in the analog multiplier 18 which produces the primary voltage command signal $V_E$ whose magnitude is the product $V_s' \cdot V_F$ supplied by multiplier 18. With the induction motor 4 continuing to rotate under the command speed $V_N$ and the prescribed speed deviation, a heavier load will enlarge the speed deviation $V_s'$ and therefore increase the amplitude of the primary voltage command signal $V_E$.

In parallel with the foregoing circuit operations, the three-phase AC voltages $U_{UV}$, $V_{VW}$, $V_{WU}$ from the inverter circuit 3 are being full-wave rectified by the full-wave rectifier 19. Low-pass filter 20 levels the ripple contained in the DC voltage provided by the full-wave rectification and produces an output voltage which is proportional to the total error resulting from voltage fluctuation in the three-phase power source 1 as well as error in the phase control system that drives the inverter 3. The adder 23 operates on the primary voltage command signal $V_E$ and the DC voltage provided by the low-pass filter 20 and calculates their difference. In other words, the primary voltage command signal $V_E$ is corrected in accordance with the error which results from voltage fluctuation and the error in the phase control system. The corrected primary voltage command signal, now known as $V_E'$, is applied to the analog multiplier 24 via the amplifier 22 which, since it is receiving the three-phase rectangular signals, AS, BS, CS, multiplies the signals AS, BS, CS by the primary voltage command signal $V_E'$ to produce three-phase rectangular signals AS', BS', CS' which conform in amplitude to the speed deviation signals $V_s'$ and frequency command signal $V_F$ and which are proportional in frequency to the frequency command signal $V_F$.

The comparators 26a, 26b, 26c compare the peak values of the respective rectangular signals AS', BS', CS' with the amplitude of the saw-tooth wave STS being provided by the saw-tooth oscillator 25, and each comparator is adapted to produce a logic "1" output if the amplitude of its AS', BS' or CS' input is greater than the saw-tooth amplitude. In this manner the comparators 26a, 26b, 26c produce the phase control signals APM BPM, CPM of three phases, the signals being modulated in pulse width in accordance with the amplitude of each rectangular wave signal AS', BS', CS'. Here it should be noted that the effective voltage value of each phase control signal APM, BPM, CPM is proportional to the speed deviation $V_s'$ and the frequency command signal $V_F$ because the amplitude of each of the rectangular signals AS', BS', CS' is proportional to $V_s'$ and $V_F$. In addition, the frequency of each of the phase control signals APM, BPM, CPM is proportional to the frequency command signal $V_F$ from the fact that the frequency of the signals AS', BS', CS' is proportional thereto.

The NOT gates $NOT_1$ to $NOT_3$ and driver circuits 27 to 32 use the phase control signals APM, BPM, CPM to produce drive signals AMP', \*APM', BPM' \*BPM', CPM', \*CPM' for controlling the on-off operation of the power transistors $Q_1$ to $Q_6$ in inverter circuit 3. These drive signals drive the power transistors $Q_1$ to $Q_6$ in a sequential manner so that the inverter circuit 3 will produce stepped AC voltages $V_{UV}$, $V_{VW}$, $V_{WU}$ which have been modulated in pulse width. These three-phase voltages $V_{UV}$, $V_{VW}$, $V_{WU}$ are applied as primary voltages to the induction motor 4 and serve to control its speed. At this time the effective value $E_1$ of the three-phase voltages $V_{UV}$, $V_{VW}$, $V_{WU}$ is proportional to both the speed deviation $V_s'$ and frequency command signal $V_F$, and the primary frequency $f_1$ thereof is proportional to the frequency command signal $V_F$. Accordingly, if the speed deviation $V_s'$ is constant, the effective value $E_1$ of the primary voltage and the primary frequency $f_1$ will be proportional to each other. The speed of induction motor 4 will therefore be regulated in accordance with VVVF control.

The operation described above is normally repeated until the speed deviation between the actual speed $V_n$ and the command speed $V_N$ attains the prescribed speed deviation value. Moreover, it should be particularly noted that the effective value of the three-phase AC voltages $V_{UV}$, $V_{VW}$, $V_{WU}$ is dependent upon the speed deviation $V_S$. In addition, the speed deviation is approximately proportional to the degree of load fluctuation. Hence, if the actual speed drops, i.e., the speed deviation $V_s'$ increases, owing to an increase in load, the effective value $E_1$ of primary voltage $V_{UV}$, $V_{VW}$, $V_{WU}$ becomes larger than the value decided by the VVVF control, whereby the generated torque is increased. On the other hand, if the actual speed rises, or the speed deviation $V_S$ decreases, owing to a decrease in the load, the effective value $E_1$ of primary voltage $V_{UV}$, $V_{VU}$, $V_{WU}$ becomes smaller than the value decided by VVVF control, whereby the generated torque is decreased.

Now, it is noted that the amplitude of the slip signal $V_{SO}$ is kept constant, although the actual speed of the induction motor varies. This control results in secure and smooth rotation of the induction motor 4. Figure 12 is a graph for explaining frequency command signal $V_F$ versus the actual speed $V_n$ characteristics. In Figure 12, a straight line B shows the primary frequency corresponding to the actual speed $V_n$ only, and a straight line A shows the primary frequency obtained by adding together the frequency $(f_{SO})$ in proportion to the slip signal $V_{SO}$ and the frequency in proportion to the actual speed $V_n$. The apparatus embodying the present invention adopts the frequency command signal $V_F$ on the basis of the A characteristics.

(b) Motor control in the orientation mode.

Operation mode has to be changed from cutting mode to orientation mode only in the stop condition of the induction motor. So, after the motor ceases to rotate, the torque limit signal generaetor 17 generates an orientation signal which is equivalent to the torque limit signal TLS and the speed command circuit 6 instructs a command speed $V_N$ smaller than that in the cutting mode. The orientation signal makes the limiter 16a function to limit the speed deviation $V_S$ to less than a prescribed clamp voltage $V_{SL}$ set by the clamp voltage setting circuit 16b.

In the steady-state, the speed deviation is maintained at constant small value and the induction motor rotates in the low speed corresponding to the command speed. Therefore, an inequality $V_S < V_{SL}$ is met and the limiter 16a produces $V_S$ as an output resulting in small value of the primary voltage command signal $V_E$.

With the motor continuing to rotate in the steady-state a pin projecting from the spindle of the machine strikes a stop portion resulting in stop of the rotation of the motor. Now, at the position where the pin strikes the stoppage portion, a cutting portion formed on the tool faces one formed on the spindle and thereafter the tool is mounted on the spindle fixedly. Here, since the actual speed $V_n$ is zero when the motor ceases to rotate, the frequency command signal $V_F$ becomes equal to slip signal $V_{SO}$. On the other hand, the speed deviation V

$$V_S (= V_N - V_n = V_N)$$

becomes a maximum resulting in $V_S$ exceeding the low clamp voltage $V_{SL}$. The limiter functions to limit the speed deviation and produces $V_{SL}$ as an output.

After all, the frequency command signal $V_F$ is rendered equal to the slip signal $V_{SO}$ and the primary voltage command signal $V_E$ is rendered equal to $V_{SL} \cdot V_{SO}$. As the result the primary voltage impressed on the induction motor is limited and also the generated torque is limited so as not to change or damage the spindle.

In accordance with the present invention as described above, the induction motor can be utilized as a spindle motor that is required to rotate in a low torque and low speed region, and further it is possible to mount a tool on the spindle without damaging this spindle etc.

## Claims

1. Induction motor drive apparatus, which includes an inverter (3) for converting DC voltage into three-phase AC voltage, an induction motor (4) driven by the three-phase AC voltage, command means (6) for instructing the induction motor to rotate at a command speed $(V_N)$, means (5) for detecting the actual speed $(V_n)$ of the motor (4), speed deviation signal generating means (7) for generating a speed deviation signal based on the difference between command speed $(V_N)$ and actual speed $(V_n)$ of the motor (4), and means for controlling the effective value and the frequency of the three-phase AC driving signals applied to the induction motor on the basis of the speed deviation signal, the apparatus further including torque limit signal generating means (17) for generating a torque limit signal (TLS), amplitude control means (16) operable to control the amplitude of the speed deviation signal when a torque limit signal (TLS) is generated, slip value signal generating means (10) for generating a slip value signal $(V_{SO})$ of a constant voltage magnitude, positive or negative in dependence upon the direction of torque of the motor, addition means (11) for adding the actual speed signal $(V_N)$ to the slip value signal $(V_{SO})$ to provide an addition signal, being a primary frequency command signal $(V_F)$, and multiplying means (18) for providing a multiplication product, being a primary voltage command signal $(V_E)$, dependent upon the addition signal $(V_F)$ and the speed deviation signal as supplied from the amplitude control means (16), the control of the amplitude of the speed deviation signal by the amplitude control means (16) being such that when the torque limit signal (TLS) is generated the driving signals limit the torque of the induction motor (14) in a low speed region to less than a preselected torque value, rectangular wave signal generating means (14, 15) for producing three-phase rectangular wave signals of a frequency dependent upon the addition signal $(V_F)$, and pulse width modulating means (24, 25, 26a, to 26c) for modulating the width of the three-phase rectangular wave signals in dependence upon the said multiplication product $(V_E)$, the inverter being controlled in dependence upon the pulse-width modulated three-phase rectangular wave signals thereby to control the frequency and effective value of the driving signals.

2. Apparatus as claimed in claim 1, wherein the amplitude control means (16) include a limiter (16a) for limiting the amplitude of the speed deviation signal to less than a clamp voltage, a clamp voltage setting circuit (16b) for setting the clamp voltage, and a switching circuit (16c) for bringing the limiter (16a) into effective operation when a torque limit signal (TLS), is generated (Figure 7).

3. Apparatus as claimed in claim 1, wherein the amplitude control means (16) include a voltage divider (16a) for dividing the voltage value of the deviation signal, in accordance with a selectable dividing ratio, and a switching circuit (16c) for bringing the voltage divider (16a) into effective operation when a torque limit signal (TLS) is generated (Figure 9).

4. Apparatus as claimed in claim 1, wherein said pulse width modulating means (24, 25, 26a to 26c) comprises an amplitude control circuit (24) for controlling the amplitude of each of the three-phase rectangular wave signals on the basis of the said multiplication product $(V_E)$, a saw-tooth generator circuit (25) for generating a saw-tooth signal whose frequency is higher than that of the three-phase rectangular wave signals, and a comparator (26a, 26b, 26c) for comparing the level of each of the three-phase rectangular wave signals, controlled in amplitude by said amplitude control circuit (24), with the level of the saw-tooth signal, the comparator producing the pulse-width modulated rectangular wave signals in dependence upon the results of the level comparison.

5. Apparatus as claimed in claim 1, further including a full-wave rectifier (19) for full-wave rectifying the three-phase AC voltage driving signals, and a low-pass filter (20) for smoothing ripple contained in the output of the full-wave rectifier (19), the level of the multiplication product $(V_E)$ provided by the multiplying means being corrected in dependence upon the output of said low-pass filter (20).

6. Apparatus as claimed in claim 1, wherein the rectangular wave signal generating means comprises a voltage-frequency converter (14) for generating a pulse train whose frequency is proportional to the said addition signal, and a three-phase ring counter (15) responsive to said pulse train to provide the three-phase rectangular wave signals from respective stages thereof.

7. Induction motor drive apparatus as claimed in any preceding claim, in operative connection with a spindle motor of a machine tool, wherein an orientation signal generated when a tool is to be mounted on a spindle driven by the spindle motor is the torque limit signal.

8. A machine tool including induction motor drive apparatus as claimed in any preceding claim.

## Patentansprüche

1. Regelgerät für einen Induktionsmotor, mit einem Wechselrichter (3) zum Umsetzen einer Gleichspannung in eine Dreiphasen-Wechselspannung, mit einem Induktionsmotor (4), der von der Dreiphasen-Wechselspannung angetrieben wird, mit einer Geschwindigkeitseinstellsignalschaltung (6) zur Beeinflussung des Induktionsmotors dahingehend, daß er bei einer Sollgeschwindigkeit ($V_N$) dreht, mit einer Istgeschwindigkeits-Erfassungseinrichtung (5) zum Erfassen der Istgeschwindigkeit ($V_n$) des Induktionsmotors (4), mit einer Geschwindigkeitsabweichungssignal - Erzeugungseinrichtung (7) zum Erzeugen eines Geschwindigkeitsabweichungssignals auf der Grundlage der Differenz zwischen der Sollgeschwindigkeit ($V_N$) und der Instgeschwindigkeit ($V_n$) des Induktionsmotors (4) und mit Einrichtungen zum Einstellen des Effektivewertes und der Frequenz der als Antriebsspannungen dienenden Dreiphasenwechselspannungen, die an den Induktionsmotor auf der Grundlage des Geschwindigkeitsabweichungssignals gelegt werden, wobei eine Drehmomentbegrenzungssignal - Erzeugungseinrichtung (17) zum Erzeugen eines Drehmomentbegrenzungssignals (TLS), eine Amplitudenregeleinrichtung (16), die wirksam ist, um die Amplitude des Geschwindigkeitsabweichungssignals zu regeln, wenn ein Drehmomentbegrenzungssignal (TLS) erzeugt wird, eine Schlupfwertsignal-Erzeugungseinrichtung (10) zum Erzeugen eines Schlupfwertsignals ($V_{SO}$) einer konstanten Spannungshöhe, die positiv oder negativ in Abhängigkeit von der Richtung des Drehmoments des Induktionsmotors ist, ein Addierglied (11) zum Addieren des Signals für die Istgeschwindigkeit ($V_n$) auf das Schlupfwertsignal ($V_{SO}$) um ein Additionssignal zu erzeugen, das ein primäres Frequenzeinstellsignal ($V_F$) ist, und ein Multiplizierglied (18) zum Erzeugen eines Multiplikationssignals, das ein primäres Spannungseinstellsignal ($V_E$) ist, welches abhängig von dem Additionssignal ($V_F$) und dem Geschwindigkeitsabweichungssignal ist, wie es von der Amplitudenregeleinrichtung (16) geliefert wird, vorgesehen sind, wobei die Regelung der Amplitude des Geschwindigkeitsabwechungssignals durch die Amplitudenregeleinrichtung (16) derart ist, daß dann, wenn das Drehmomentbregrenzungssignal (TLS) erzeugt wird, die Antriebsspannungen das Drehmoment des Induktionsmotors (4) in einem Niedriggeschwindigkeitsbereich auf weniger als einen vorgewählten Drehmomentwert begrenzen, wobei eine Rechteckwellensignal-Erzeugungsanordnung (14, 15) zum Erzeugen von Dreiphasen-Recheckwellensignalen einer Frequenz, die abhängig von dem Additionssignal ($V_F$) ist, vorgesehen ist, wobei eine Impulsbreitenmodulationsanordnung (24, 25, 26a...26c) zum Modulieren der Impulsbreite der Dreiphasen - Rechteckwellensignale in Abhängigkeit von dem Multiplikationssignal ($V_E$) vorgesehen ist und wobei der Wechselrichter in Abhängigkeit von den impulsbreitenmodulierten Dreiphasen - Rechteckwellensignalen gesteuert wird, um dadurch die Frequenz und den Effektivwert der Antriebsspannungen zu regeln.

2. Regelgerät nach Anspruch 1, dadurch gekennzeichnet, daß die Amplitudenregeleinrichtung (16) eine Begrenzerschaltung (16a) zum Begrenzen der Amplitude des Geschwindigkeitsabweichungssignals auf weniger als eine Klemmspannung enthält und daß eine Klemmspannungs-Einstellschaltung (16b) zum Einstellen der Klemmspannungs und eine Schalteinrichtung (16c) zum Wirksamschalten der Begrenzerschaltung (16a) dann, wenn ein Drehmomentbegrenzungssignal (TLS) erzeugt wird (Fig. 7), vorgesehen sind.

3. Regelgerät nach Anspruch 1, dadurch gekennzeichnet, daßdie Amplitudenregeleinrichtung (16) einen Spannungsteiler (16a) zum Teilen des Spannungswertes des Geschwindigkeitsabweichungssignals in Übereinstimmung mit einem wählbaren Teilungsverhältnis enthält und daß eine Schalteinrichtung (16c) zum Wirksamschalten des Spannungsteilers (16a) dann, wenn ein Drehmomentbegrenzungssignal (TLS) erzeugt wird (Fig. 9), vorgesehen ist.

4. Regelgerät nach Anspruch 1, dadurch gekennzeichnet, daß die Impulsbreitenmodulationsanordnung (24, 25, 26a...26c) aus einer Amplitudenregelschaltung (24) zum Regeln der Amplitude jedes der Dreiphasen-Rechteckwellensignale auf der Grundlage des Multiplikationssignals ($V_E$), einer Sägezahngeneratorschaltung (25) zum Erzeugen eines Sägezahnsignals, dessen Frequenz höher als diejenige der Dreiphasen-Recheckwellensignale ist, und einer Komparatoranordnung (26a, 26b, 26c) zum Vergleichen der Pegel jedes der Dreiphasen-Rechteckwellensignale, die in ihrer Amplitude durch die Amplitudenregelschaltung (24) geregelt werden, mit dem Pegel des Sägezahnsignals, wobei die Komparatoranordnung die impulsbreitenmodulierten Rechteckwellensignale in Abhängigkeit von den Ergebnissen der Pegelvergleiche erzeugt, besteht.

5. Regelgerät nach Anspruch 1, dadurch gekennzeichnet, daß ein Vollweggleichrichter (19) zur Vollweggleichrichtung der Dreiphasen-Wechselspannungen, die als Treiberspannungen dienen, und ein Teifpaßfilter (20) zum Glätten von Oberwellen, die in der Ausgangsspannung des Vollweggleichrichters (19) enthalten sind, vorgesehen sind und daß der Pegel des Multiplikationssignals ($V_E$), das von dem Multiplizierglied geliefert wird, in Abhängigkeit von des Ausgangssignal des Tiefpaßfilters (20) korrigiert wird.

6. Regelgerät nach Anspruch 1, dadurch gekennzeichnet, daß die Rechteckwellensignal-Erzeugungsanordnung aus einem Spannungs/Frequenz-Wandler (14) zum Erzeugen eine Impulsfolge, deren Frequenz proportional zu dem Additionssignal ist, und einen Dreiphasen-Ringzähler (15), der auf die Impulsfolge anspricht, um die Dreiphasen-Rechteckwellensignale aus entsprechenden Stufen davon zu liefern, besteht.

7. Regelgerät für einen Induktionsmotor nach einem der vorhergehenden Ansprüche, dadurch gekennzeichnet, daß das Regelgerät in Verbindung mit einem Spindelmotor einer Werkzeugmaschine betrieben wird, wobei ein Orientierungssignal, das erzeugt wird, wenn ein Werkzeug an einer Spindel, die von dem Spindelmotor angetrieben wird, angebracht werden soll, das Drehmomentbegrenzungssignal ist.

8. Werkzeugmaschine mit einem Regelgerät für einen Induktionsmotor nach einem der vorhergehenden Ansprüche.

**Revendications**

1. Dispositif de commande de moteur à induction qui comprend un inverseur (3) servant à convertir une tension continue en tension alternative triphasée, un moteur à induction (4) excité par la tension alternative triphasée, des moyens d'ordre (6) permettant d'ordonner au moteur à induction de tourner à une vitesse d'ordre ($V_N$) des moyens (5) de détection de la vitesse réelle ($V_n$) du moteur (4), des moyens générateurs de signal d'écart de vitesse (7) servant à engendrer un signal d'écart de vitesse basé sur la différence entre la vitesse d'ordre ($V_N$) et la vitesse réelle ($V_n$) du moteur (4), et des moyens de commande de la valeur effective et de la fréquence des signaux d'excitation à courant alternatif triphasé appliqués au moteur à induction sur la base du signal d'écart de vitesse, le dispositif comprenant en outre des moyens générateurs de signal de limite de couple (17) pour engendrer un signal de limite de couple (SLC), des moyens de commande d'amplitude (16) capables de commander l'amplitude du signal d'écart de vitesse quand un signal de limite de couple (SLC) est engendré, des moyens générateurs de signal de valeur de glissement (10) servant à engendrer un signal de valeur de glissement ($V_{SO}$) de tension constante, positive ou négative selon le sens du couple du moteur, des moyens d'addition (11) pour ajouter le signal de vitesse réelle ($V_N$) au signal de valeur de glissement ($V_{SO}$) afin de fournir un signal d'addition qui est un signal d'ordre de fréquence primaire ($V_F$), et des moyens de multiplication (18) pour fournir un produit de multiplication qui est un signal d'ordre de tension primaire ($V_E$) dependant du signal d'addition ($V_F$) et du signal d'écart de vitesse fourni par les moyens de commande d'amplitude (16), la commande de l'amplitude du signal d'écart de vitesse par les moyens de commande d'amplitude (16) étant telle que lorsque le signal de limite de couple (SLC) est engrendré, les signaux d'excitation limitent le couple du moteur à induction (14) dans le domaine des petites vitesses, à une valeur inférieure à une valeur de couple choisie à l'avance, des moyens générateurs de signal d'onde rectangulaire (14, 15) pour produire des signaux triphasés d'onde rectangulaire d'une fréquence qui dépend du signal d'addition ($V_F$), et des moyens de modulation de largeur d'impulsions (24, 25, 26a, à 26c) pour moduler la largeur des signaux triphasés d'onde rectangulaire sous la dépendance dudit produit de multiplication ($V_E$), l'inverseur étant commandé sous la dépendance des signaux triphasés d'onde rectangulaire à largeur d'impulsions modulée, de manière à commander la fréquence et la valeur effective des signaux d'excitation.

2. Dispositif selon la revendication 1, dans lequel les moyens de commande d'amplitude (16) comprennent un limitateur (16a) pour limiter l'amplitude du signal d'écart de vitesse à moins d'une tension de verrouillage, un circuit d'établissement de tension de verrouillage (16b) pour établir la tension de verrouillage et un circuit de commutation (16c) pour mettre le limiteur (16a) en fonctionnement effectif quand un signal de limite de couple (SLC) est engendré (Fig. 7).

3. Dispositif selon la revendication 1, dans lequel les moyens de commande d'amplitude (16) comprennent un diviseur de tension (16a) pour diviser la valeur de tension du signal d'écart, conformément à un rapport de division qui peut être choisi, et un circuit de commutation (16c) pour mettre le diviseur de tension (16a) en fonctionnement effectif quand un signal de limite de couple (SLC) est engendré (Fig. 9).

4. Dispositif selon la revendication 1, dans lequel lesdits moyens de modulation de largeur d'impulsion (24, 25, 26a à 26c) comprennent un circuit de commande d'amplitude (24) pour commander l'amplitude de chacun des signaux d'onde rectangulaire triphasés sur la base dudit produit de multiplication ($V_E$), un circuit générateur en dents de scie (25) pour engendrer un signal en dents de scie dont la fréquence est supérieure à celle des signaux d'onde rectangulaire triphasés et un comparateur (26a, 26b, 26c) pour comparer le niveau de chacun des signaux d'onde rectangulaire triphasés, commandés en amplitude par le circuit de commande d'amplitude (24) avec le niveau du signal en dents de scie, le comparateur produisant les signaux d'onde rectangulaire modulés en largeur d'impulsion sous la dépendance des résultats de la comparaison.

5. Dispositif selon la revendication 1, comprenant en outre un redresseur à double alternance (19) pour redresser les deux alternances des signaux d'excitation à tension alternative triphasée et un filtre passe-bas (20) pour égaliser l'ondulation contenue dans le signal de sortie du redresseur à double alternances (19), le niveau du produit de multiplication ($V_E$) fourni par les moyens de multiplication étant corrigé sous la dépendance du signal de sortie du filtre passe-bas (20).

6. Dispositif selon la revendication 1, dans lequel les moyens générateurs de signal d'onde rectangulaire comprennent un convertisseur tension-fréquence (14) pour engendrer un train d'impulsions dont la fréquence est propor-

19 **0013171** 20

tionnelle au signal d'addition, et un compteur en anneau triphasé (15) sensible au train d'impulsions pour fournir les signaux d'onde rectangulaires triphasés venant d'étages respectifs du compteur.

7. Dispositif de commande pour moteur à induction selon l'une quelconque des revendications précédentes, en liaison fonctionnelle avec un moteur de broche d'une machine-outil, dans lequel un signal d'orientation, engendré quand il y a lieu de monter un outil sur une broche entraînée par le moteur de broche, est le signal de limite de couple.

8. Machine-outil comprenant un dispositif de commande de moteur à induction selon l'une quelconque des revendications précédentes.

# Fig. 1

# Fig. 2

# Fig. 3

# Fig. 6

1

Fig. 4

0013171

Fig. 5

**0013171**

# Fig. 7

# Fig. 8

4

# Fig. 9

12

18

16a

R2 Vs

IVs

VR2

+6V

RL2 ℓℓ2 16c

TLS

17

# Fig. 10

OUTPUT OF THE AMPLITUDE CONTROL CIRCUIT Vs'

SWITCH: OFF

SWITCH: ON

SPEED DEVIATION Vs

# Fig. 12

FREQUENCY COMMAND SIGNAL Vf

A

B

fso

ACTUAL SPEED Vn

# Fig. 11

PRIMARY VOLTAGE COMMAND SIGNAL Ve

A

B

SPEED DEVIATION Vs'

5